Europäisches Patentamt

European Patent Office

Office européen des brevets

(19)

(11) **EP 1 164 541 A2**

(12) **EUROPEAN PATENT APPLICATION**

(43) Date of publication:
**19.12.2001 Bulletin 2001/51**

(51) Int Cl.$^7$: **G06N 3/00**

(21) Application number: **01114489.6**

(22) Date of filing: **15.06.2001**

(84) Designated Contracting States:
**AT BE CH CY DE DK ES FI FR GB GR IE IT LI LU
MC NL PT SE TR**
Designated Extension States:
**AL LT LV MK RO SI**

(30) Priority: **16.06.2000 JP 2000181045**

(71) Applicant: **Sony Computer Entertainment Inc.
Tokyo 107-0052 (JP)**

(72) Inventor: **Takano, Masanori,
c/o Sony Comp. Entertainment Inc
Tokyo 107-0052 (JP)**

(74) Representative:
**Müller . Hoffmann & Partner Patentanwälte
Innere Wiener Strasse 17
81667 München (DE)**

(54) **Method of expressing crowd movement in game, storage medium, and information processing apparatus**

(57)    A technique is provided for expressing a state in which individuals move as crowds. When a plurality of individuals gather, an object control section creates a crowd object, which is a virtual object. The crowd object gives instructions for the position of each individual in the crowd object and instructions for the movement direction as crowds to the individuals which form the crowd object. Each individual moves in accordance with these instructions.

FIG.1

EP 1 164 541 A2

## Description

### BACKGROUND OF THE INVENTION

### 1. Field of the Invention

The present invention relates to a technique for expressing the behavior of crowds, which are groups of individuals, in a simulated manner and, more particularly, relates to a technique for graphically expressing a state in which individuals move as a crowd by using an information processing apparatus.

### 2. Description of Related Art

The term "crowd" refers to a group of assembled individuals, and "movement" of a crowd refers to each individual moving while maintaining the assembled state. In the information processing apparatus, in order to express this movement of the crowd in a simulated manner, a first method of giving instructions for movement toward a destination to each individual which is a member of the crowd, and a second method of giving instructions for movement toward a destination to the crowd are conceived.

However, in the first method, each individual moves without considering the relationship with the other individuals in the crowd, making it difficult to express the behavior as a crowd well.

On the other hand, in the second method, the crowd itself moves toward the destination. However, the crowd moves with the distribution of each individual in the crowd being unchanged. As a result, it is not possible to express a movement, such as the flow of a crowd, and the movement becomes unnatural.

For this reason, there has been a need to develop techniques capable of expressing the behavior of each individual which is a member of a crowd and capable of expressing a natural movement as a crowd.

### SUMMARY OF THE INVENTION

An object of the present invention is to provide a technique for expressing a state in which individuals move as a crowd.

To achieve the above-mentioned object, according to the present invention, there is provided a method of expressing the movement of a crowd, comprising the steps of: obtaining the number of individuals which form a crowd at time t and the position of each individual, and assigning a position to each individual in the crowd at the next time t + 1 in accordance with a predetermined arrangement rule; determining a destination direction with regard to a reference point of the crowd, determined by the positions of the individuals which form the crowd at time t; and determining the position at the next time t + 1 according to the position assigned by the arrangement process and the destination direction.

The above and further objects, aspects and novel features of the invention will become more fully apparent from the following detailed description when read in conjunction with the accompanying drawings.

### BRIEF DESCRIPTION OF THE DRAWINGS

Fig. 1 is a block diagram showing a software structure for implementing a chasing game which is constructed in an game apparatus;
Fig. 2 illustrates a virtual space;
Fig. 3 illustrates a data structure of blocks of a virtual space;
Figs. 4A, 4B, and 4C illustrate examples of an object list;
Fig. 5 schematically illustrates an example of a data structure which is managed by an enemy character object;
Figs. 6A and 6B illustrate a state in which enemy characters move;
Fig. 7 is a flowchart illustrating a process at one turn when the enemy character moves in an individual mode;
Figs. 8A, 8B, and 8C are image diagrams illustrating a process when the enemy characters form a crowd;
Fig. 9 schematically illustrates information which is managed by a crowd object;
Fig. 10 is a flowchart illustrating a process which is performed at one turn by the crowd object;
Figs. 11A, 11B, 11C, 11D, and 11E are illustrations of processing in which a crowd object creates arrangement information of the enemy characters;
Fig. 12 illustrates a destination direction of the crowd object;
Figs. 13A, 13B, and 13C are illustrations of an example of a movement process at a child turn of the enemy character;
Fig. 14 shows a state in which an enemy character A, an enemy character B, and an enemy character C move as a crowd from time t to time t+ Δt;
Figs. 15A and 15B are illustrations of another example of a movement process at a child turn of the enemy character;
Fig. 16 is a block diagram showing the hardware configuration of an game apparatus;
Fig. 17 is an illustration of an game apparatus in use; and
Fig. 18 is an illustration of a process in which a crowd is divided.

### DESCRIPTION OF THE PREFERRED EMBODIMENT

An embodiment of the present invention will now be described with reference to the accompanying drawings.

In this embodiment, in an game apparatus, a case is used as an example in which the present invention is applied to a chasing game in which a character, which is an enemy of a player, chases a character operated by the player.

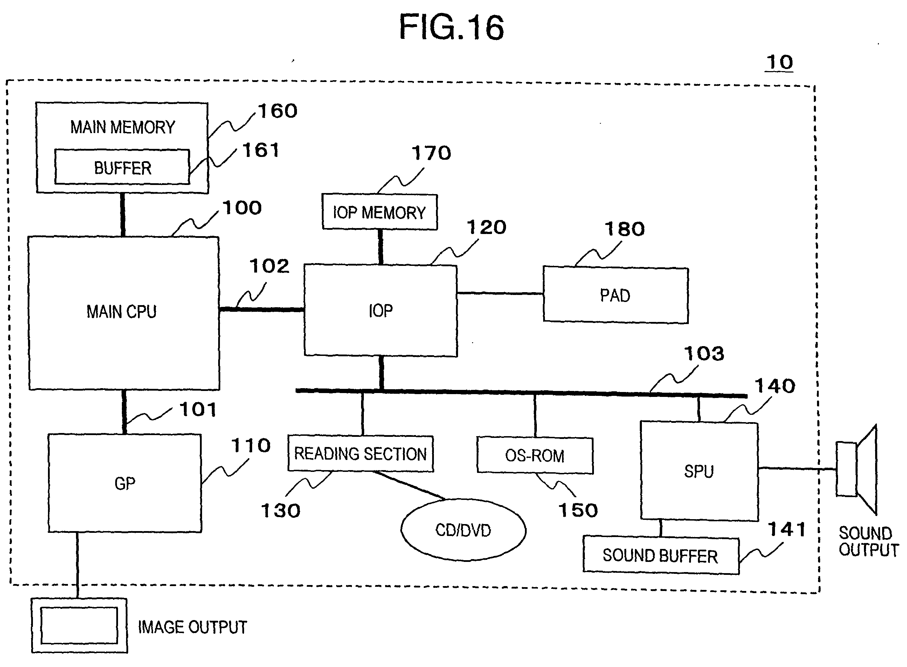

First, the hardware configuration of an game apparatus 10 according to this embodiment is described with reference to Fig. 16. Fig. 16 is a block diagram showing the hardware configuration of the game apparatus.

As shown in Fig. 16, the game apparatus 10 comprises a main CPU 100, a graphics processor (GP) 110, an I/O processor (IOP) 120, a CD/DVD reading section 130, a sound reproduction processor (SPU) 140, a sound buffer 141, an OS-ROM 150, a main memory 160, and an IOP memory 170.

The main CPU 100 and the GP 110 are connected to each other by a dedicated bus 101. Also, the main CPU 100 and the IOP 120 are connected to each other by a bus 102. Also, the IOP 120, the CD/DVD reading section 130, the SPU 140, and the OS-ROM 150 are connected to a bus 103.

The main memory 160 is connected to the main CPU 100, and the IOP memory 170 is connected to the IOP 120. Furthermore, a controller (PAD) 180 is connected to the IOP 120.

The main CPU 100 performs predetermined processing by executing a program stored in the OS-ROM 150 or a program which is transferred from a CD/DVD-ROM, etc., to the main memory 160.

The GP 110 is a drawing processor having a rendering function of this game apparatus, and performs a drawing process in accordance with instructions from the main CPU 100.

The IOP 120 is a sub-processor for input and output for controlling exchange of data among the main CPU 100 and peripheral apparatuses, such as the CD/DVD reading section 130, the SPU 140, etc.

The CD/DVD reading section 130 reads data from a CD-ROM or a DVD-ROM loaded into the CD/DVD drive, and transfers the data to a buffer area 161 provided in the main memory 160.

The SPU 140 reproduces compressed waveform data, etc., stored in the sound buffer 141 at a predetermined sampling frequency in accordance with a sound-producing command from the main CPU 100, etc.

The OS-ROM 150 is a non-volatile memory in which programs, etc., which are executed by the main CPU 100 and the IOP 120 at start-up, are stored.

The main memory 160 is a main storage device for the main CPU 100, in which commands which are executed by the main CPU 100, and data, etc., used by the main CPU 100 are stored. Also, the main memory 160 is provided with the buffer area 161 for temporarily storing data which is read from a recording medium, such as a CD-ROM or a DVD-ROM.

The IOP memory 170 is a main storage device for the IOP 120, in which commands which are executed by the IOP 120, and data, etc., used by the main CPU 100 are stored.

The controller (PAD) 180 is an interface for receiving an instruction from a player. The controller 180 has an operation section formed of a plurality of operation buttons and an operation lever, and information indicating that each operation button is depressed or the operation lever is tilted is transmitted to the main CPU 100 by a predetermined signal.

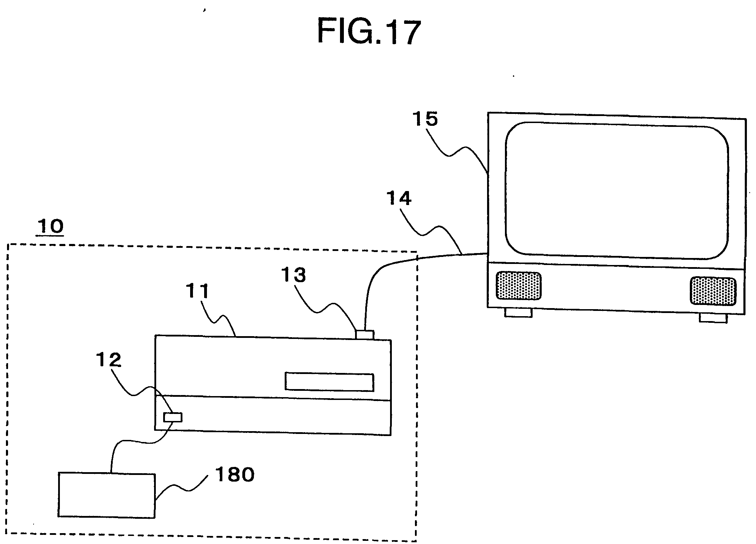

Fig. 17 is an illustration of the game apparatus 10 in use. In Fig. 17, the controller (PAD) 180 is connected to a connector section 12 of a main unit 11 of the game apparatus. Also, a cable 14 for audio-visual output is connected to an audio-visual output terminal 13 of the main unit 11 of the game apparatus. An audio-visual output apparatus 15, such as a television receiver, is connected to the other end of this cable 14. A player of the game apparatus instructs an operation by using the controller (PAD) 180. The game apparatus 10 receives the instruction from the player via the controller 180, and outputs image data and sound data to the audio-visual output apparatus 15. Then, the audio-visual output apparatus 15 outputs an image and sound.

Next, a description is given of a chasing game which is realized when the main CPU 100 executes an application program which is read from a CD/DVD loaded into the game apparatus 10 in the game apparatus 10 having the above-described construction.

In a chasing game, it is possible for the player to operate a player character for the object of an operation and to move in a virtual space by using the controller 180 connected to the game apparatus 10. On the other hand, in a virtual space 310, there are a plurality of enemy characters, which are enemies of the player characters. The enemy character usually chases the player character independently. When the enemy character finds nearby another enemy character, which is a companion, they form a crowd and chases the player character. Here, the enemy character, which is an enemy to the player character, becomes companions among the enemy characters. Of course, a plurality of groups may be provided among the enemy characters, and only the enemy characters belonging to the same group may be companions.

It is possible for the player to continue the game by operating the player character so as not to be caught by these enemy characters.

The game apparatus 10 creates an image for expressing a player character and an enemy character which move in this virtual space 310, and displays them on the display screen of the audio-visual output apparatus 15 connected to the game apparatus 10.

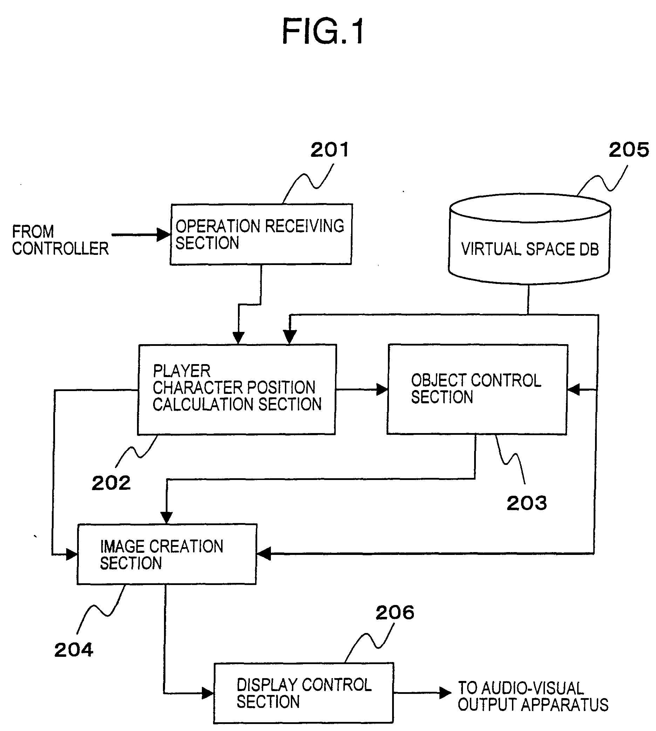

Fig. 1 is a block diagram showing the software structure for implementing a chasing game which is formed in the game apparatus 10. The components shown in Fig. 1 are embodied by executing, by the main CPU 100, an application program which is read from a CD/DVD loaded into the game apparatus 10 by the CD/ DVD reading section 130 and which is stored in the main memory 160.

In Fig. 1, a virtual space DB 205 stores data for forming a virtual space in which a chasing game is developed.

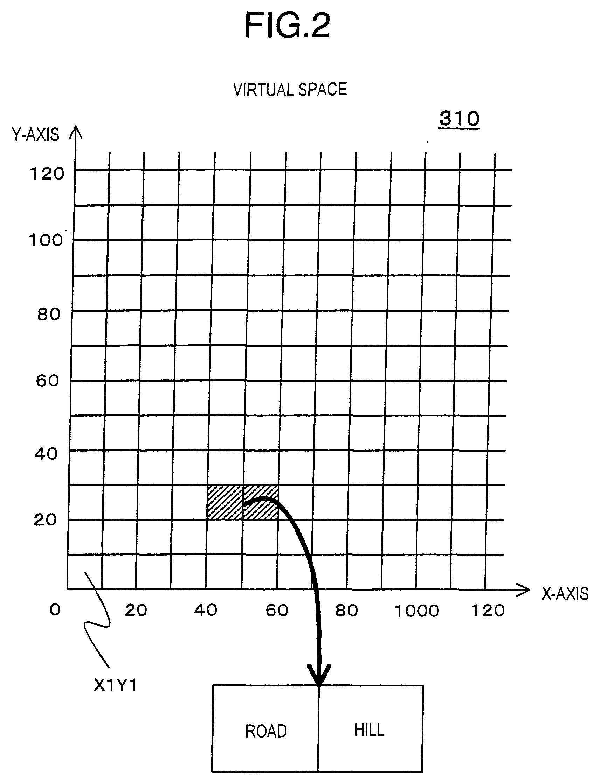

Here, as shown in Fig. 2, the virtual space 310 is a finite two-dimensional space managed as an X-Y coordinate plane. That is, the position in the virtual space 310 can be specified in the form of coordinates (x, y).

The virtual space is divided into blocks which are divided by straight lines at fixed intervals parallel to the X axis and by straight lines at fixed intervals parallel to the Y axis. Here, the virtual space is divided into blocks by setting the lower left of the virtual space 310 shown in Fig. 2 to be the origin, and by providing straight lines parallel to the X axis and the Y axis at coordinate intervals 10. The areas divided by straight lines parallel to the Y axis are denoted as X1, X2, ..., starting from an area having a smaller X coordinate, and the areas divided by straight lines parallel to the X axis are denoted as Y1, Y2, ..., starting from an area having a smaller Y coordinate. Since the areas are defined in this manner, each block can be specified in the form of XnYm so that, for example, the block of the lower left can be specified as X1Y1.

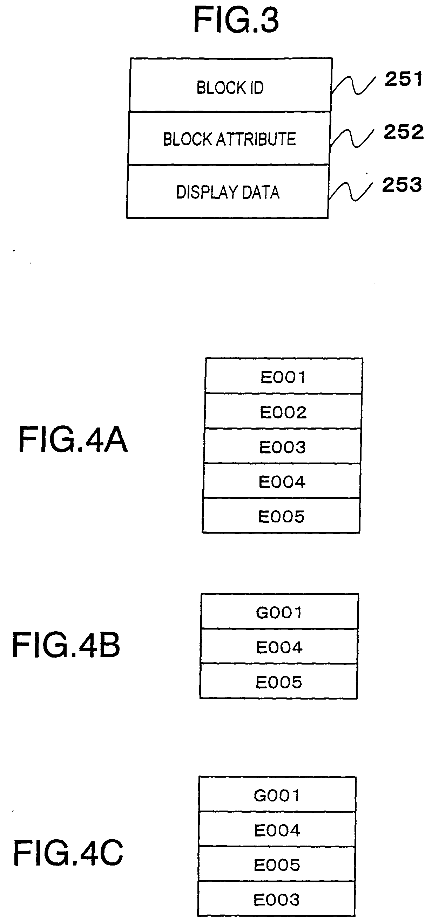

Each block has a data structure, an example of which is shown in Fig. 3.

In Fig. 3, a block ID 251 is data in the form of XnYm for specifying a block.

A block attribute 252 is information for determining a block attribute for determining geographical information of the virtual space 310 in a game structure, and the block attribute may be, for example, a code for expressing a road, a river, a hill, a prairie, etc.

Display data 253 is image data for displaying blocks. An image creation section 204 creates an image for the virtual space 310 by using this data.

In Fig. 1, an operation receiving section 201 determines the movement direction in the virtual space 310, of a player character for the object of operation by the player in accordance with an instruction from the player, received by the controller 180. This processing is performed periodically.

Here, for the movement directions, the directions (up and down and from side to side) of the player character are made to correspond to specific operation buttons or an operation lever provided in the controller 180, and the movement direction is determined by receiving the operation of the button, etc.

In Fig. 1, a player character position calculation section 202 performs a process for calculating the position of a player character for the object of operation by the player in the virtual space 310. This processing is performed periodically.

Specifically, the position of the player character in the virtual space 310 at present is calculated on the basis of the position of the player character in the virtual space 310, which was calculated previously, the up-to-date movement direction of the player character, which is determined by the operation receiving section 201, and the predetermined movement speed of the player character.

An image creation section 204 creates a two-dimensional image by superimposing data for displaying the player character and the enemy character onto the data for displaying the virtual space 310.

A display control section 206 converts the two-dimensional image created by the image creation section 204 into video signals, and displays them onto the display screen of the audio-visual output apparatus 15 connected to the game apparatus 10.

An object control section 203 controls the movement of an enemy character object in the virtual space 310. The details thereof are described below.

As objects controlled by the object control section 203, there are an enemy character object in a case where an enemy character moves independently and a crowd object formed of enemy characters. The enemy object control section 203 manages the objects to be controlled by using an object list. Fig. 4A shows an example of an object list. In Fig. 4A, the enemy object control section 203 manages enemy character objects E001, E002, E003, E004, and E005.

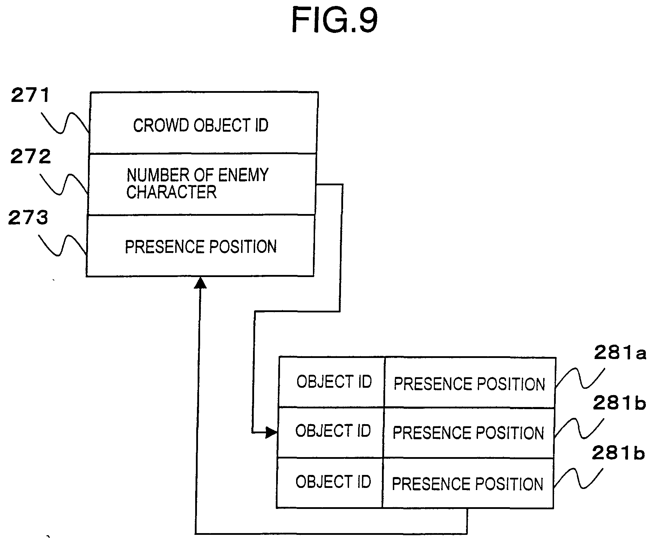

Here, if it is assumed that the enemy character objects E001, E002, and E003 form a crowd so as to form a crowd object G001, as shown in Fig. 4B, the object control section 203 deletes the enemy character objects E001, E002, and E003 from the object list (the deleted IDs are added to an enemy character list 281 of Fig. 9, and the details thereof will be described later), and adds the crowd object G001 at the beginning of the object list.

Thereafter, when the enemy character object E003 is separated from the crowd object G001, as shown in Fig. 4C, the object control section 203 adds the enemy character object E003 to the object list. Then, the enemy character object E003 moves independently. Conditions in a case where the enemy characters form a crowd and in a case where an enemy character is separated from the crowd will be described later.

In this embodiment, enemy characters are managed as independent objects, and move in accordance with predetermined action criteria. The action criteria are formed into rules and apply in common to the enemy character objects. The action criteria are described below with reference to the drawings.

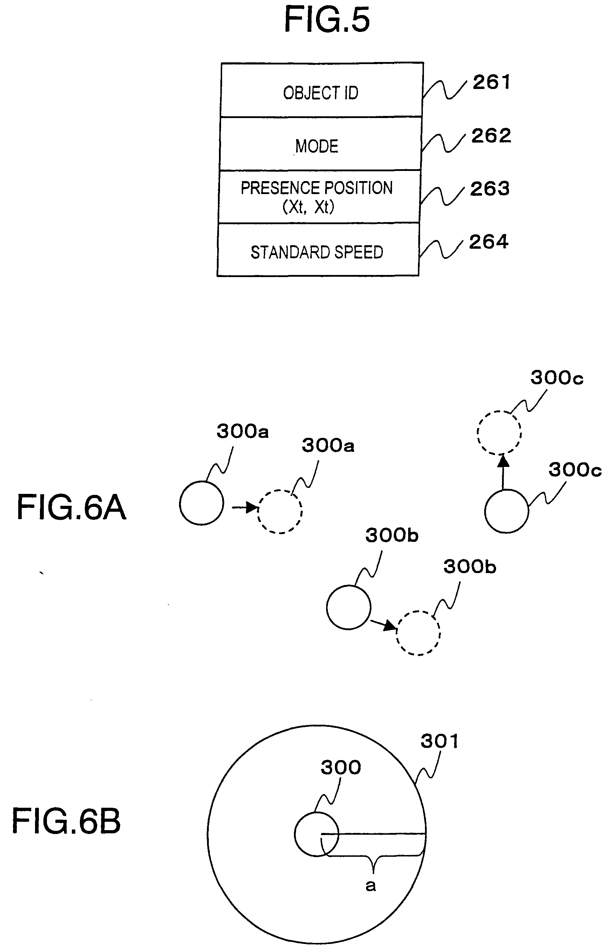

Fig. 5 schematically illustrates an example of a data structure which is managed by an enemy character object.

As shown in Fig. 5, the enemy character object has, as data, an object ID 261, a mode 262, a presence position 263, and a standard speed 264.

The object ID 261 is a code for identifying an enemy character object, and is denoted as, for example, E001 or E002.

The mode 262 is data for identifying whether the enemy character acts as an individual or acts as a member of the crowd, and there are two states of an individual mode and a crowd mode. In the initial state, the enemy character acts in the individual mode. When the enemy character finds another enemy character is found, the enemy character forms a crowd together with that enemy character, and the mode goes to a crowd mode.

The presence position 263 is coordinate data for indicating the position at which the enemy character is present in the virtual space 310, and is periodically calculated at intervals of, for example, $\Delta t$ on the basis of the previous presence position, the previous movement direction, and the previous movement speed.

The standard speed 264 is a predetermined value which indicates a reference value of a speed when the enemy character moves. For example, the value can be set to 10 per $\triangle t$ at the coordinates of the virtual space 310.

The action pattern of the enemy character changes according to the mode 262.

First, the action of the enemy character object (enemy character) in the individual mode is described below.

It is assumed that, at time t, the enemy character in the individual mode is present at the position determined by the presence position in this virtual space 310 and that the enemy character discretely changes its position at a time interval $\Delta t$ ($\triangle t$ is a short time to such a degree that the enemy character is recognized by the player as moving continuously). The moved distance at this time is determined by the movement speed of the enemy character. This movement speed of the enemy character is determined based on the standard speed. For example, if the attribute of the block containing the coordinate point at which the character is present is a road, the movement speed = the standard speed, and if the attribute is a prairie, the movement speed can be changed according to the attribute of the block in which the character is present, such as the movement speed = the standard speed $\times$ 0.8. Furthermore, when the player character is chased, the movement speed can also be changed so that the speed becomes higher.

Fig. 6A is an image diagram illustrating a state in which an enemy character moves. In Fig. 6A, enemy characters 300a, 300b, ..., move in a two-dimensional virtual space 310. In Fig. 6A, solid-line circles indicate the position of an enemy character 300 at time t, and broken-line circle indicate the position of the enemy character 300 at time t + $\Delta t$.

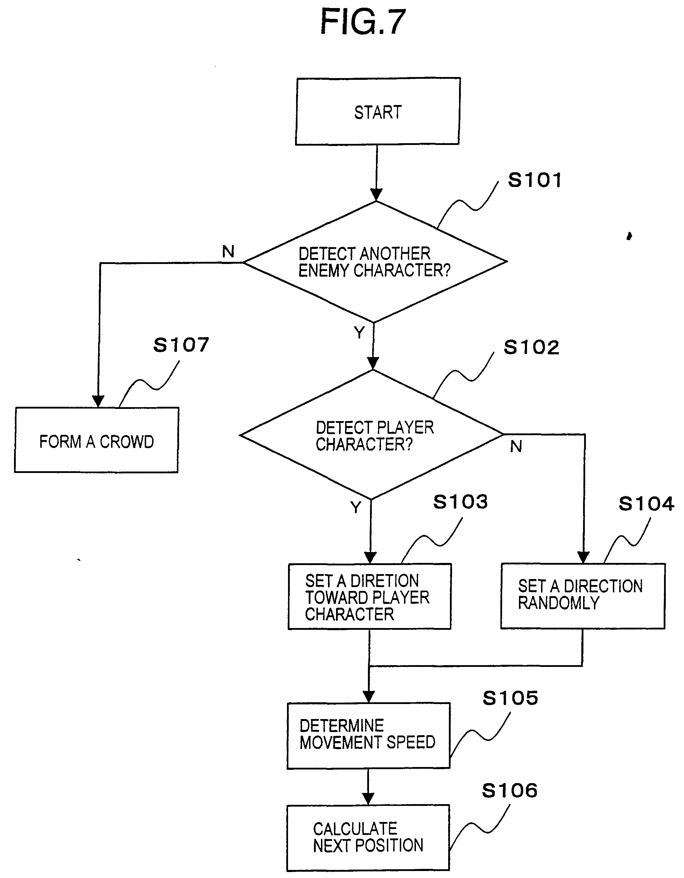

Fig. 7 is a flowchart illustrating a process at one turn when the enemy character acts in an individual mode. Here, the term "one turn" refers to a processing unit for each object at time t and is controlled by the object control section 203.

When the enemy character 300 acts in an individual mode, it has a search area 301, such as that shown in Fig. 6B, with respect to the position at which the enemy character 300 is present. This search area 301 may be an area within a circle of a radius "a" about the coordinates of the position at which the enemy character is present in the virtual space 310.

It is possible for the enemy character 300 to detect the presence of a player character 350 and another enemy character 300a in the search area 301 (S101). Specifically, by referring to the presence position 263 of the character entered in the object list, it is possible to make a determination as to whether the presence position 263 of a player character or another enemy character within the circle of a radius "a" about the coordinates of the presence position 263 of the enemy character 300.

If it is detected that another enemy character is present within the search area, the enemy character forms a crowd together with the other enemy character (S107). This processing will be described later.

On the other hand, when it is detected that a player character is present within the search area (S102), the enemy character determines the destination direction on the basis of the positional relationship between the coordinates of the player character and the coordinates the enemy character itself (S103). Here, the destination direction to be determined is set to be a direction in which the player character is present. That is, the enemy character obtains the coordinates at which the player character is present and sets the destination direction in which the enemy character chases the player character.

Next, the enemy character determines the movement speed (S105). The movement speed may be set to be, for example, 1.2 times higher than the standard speed. Also, as described above, the movement speed may be changed according to an attribute 252 of the block in which the enemy character is present.

Then, the coordinates at time t + $\Delta t$ are calculated on the basis of the determined destination direction and the determined movement speed (S106). Then, the coordinates are set to be the current position, and the turn at time t is terminated.

When the enemy character does not detect another enemy character or a player character within the search area, the enemy character arbitrarily determines the destination direction by using, for example, a random number (S104). At this time, in order not to make the state of the movement unnatural, the destination direction is preferably set to be a direction which does not vary significantly from the destination direction at time t.

Next, the enemy character determines the movement speed (S105). The movement speed may be, for example, a standard speed. Of course, the movement speed may be changed according to the attribute 252 of the block in the above-described manner.

Then, the coordinates at time t + $\Delta t$ are calcu-

lated based on the determined destination direction and the determined movement speed (S106). Then, the coordinates are set to be the current position, and the turn at time t is terminated.

In the manner as described above, one turn of one enemy character at time t is terminated. That is, the enemy character performs one of the actions of forming a crowd and moving to the current position at time t + $\Delta$t, at one turn at time t.

This action is performed in sequence by all the enemy characters in the individual mode at time t. A control method at this time is described below.

An object control means manages an object list such as that shown in Fig. 4A, as described above. Then, at time t, the object control means causes the enemy character objects recorded in the object list to sequentially perform processing at one turn. For example, as shown in Fig. 4A, if it is assumed that an enemy character E004 and an enemy character E005 are recorded in the object list, at time t, initially, the enemy character E004 is made to perform the above-described processing of one turn. When this turn is terminated, next, the enemy character E005 is made to perform a processing of one turn. When the turn of the enemy character E005 is terminated, the processing at time t is terminated.

By performing this processing at intervals of $\Delta$t, it is possible to cause the enemy character E004 and the enemy character E005 to act continuously. In a case where, as shown in Figs. 4B and 4C, the crowd object is recorded in the object list, the turn of the crowd object at time t is performed before the turn of the enemy character object at time t is performed. This processing will be described later.

As described above, when it is detected that another enemy character is present within the search area, the enemy character forms a crowd together with an enemy character present within the search area (S107).

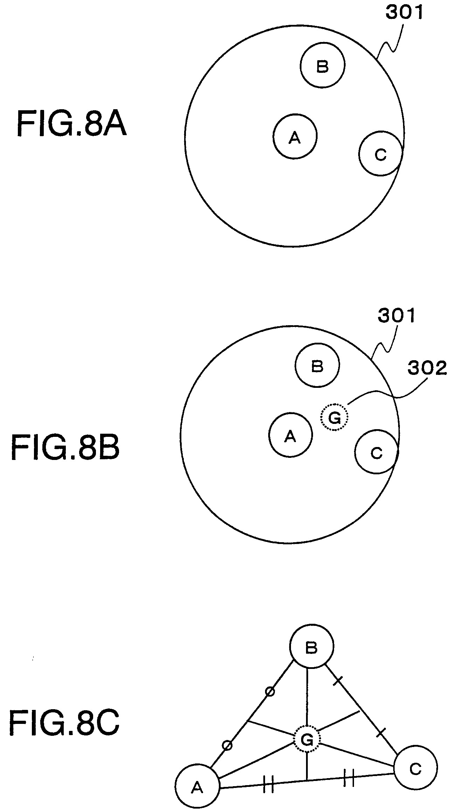

The processing for forming a crowd at this time is described below with reference to Figs. 8A, 8B, and 8C. In this example, as shown in Fig. 8A, it is assumed that an enemy character A (E006) detects an enemy character B (E007) and an enemy character C (E008), which are present within the search area 301, at the turn at time t, and the three members form a crowd.

Initially, the object control means 203 receives a notification from the enemy character A, and as shown in Fig. 8B, forms a crowd object G (G002) 302, which is a virtual leader for the enemy characters present within the search area 301. Then, the object control section 203 adds "G002", which is an ID of the crowd object G, to the start of the object list, and deletes the IDs of the enemy character A, the enemy character B, and the enemy character C, which form the crowd object, from the object list. Furthermore, the mode 262 of the enemy character A, the enemy character B, and the enemy character C is changed from the individual mode to the crowd mode. Then, the turn of the enemy character A at time t is terminated.

The crowd object will now be described.

The crowd object is a virtual object, a display of which is not produced. The position of the crowd object, as shown in Fig. 8c, is set to be the center (the center-of-gravity coordinates in the virtual space 310) of the positions of the enemy characters which form the crowd. That is, the position of the crowd object at time t is determined by the positions at time t of the enemy characters which form the crowd. Depending on a selection by the player, the crowd object may be displayed in a figure which is distinguished from the enemy character.

Furthermore, the crowd object has information of the number of enemy characters which form the crowd and the positional information thereof. Fig. 9 schematically illustrates a data structure of information which is managed by the crowd object.

In Fig. 9, the crowd object manages a crowd object ID 271 for identifying a crowd object, the number 272 of enemy characters which form the crowd, and a presence position 273 of the crowd object.

In addition, the crowd object has information for managing the IDs and the presence positions of the respective enemy characters in such a manner as to correspond to the number 272 of enemy characters. For the information for managing the presence positions of the enemy characters, in this example, the ID and the presence position of the enemy character A are managed by information indicated by reference numeral 281a, the ID and the presence position of the enemy character B are managed by information indicated by reference numeral 281b, and the ID and the presence position of the enemy character C are managed by information indicated by reference numeral 281c. Meanwhile, based on the presence position information of these enemy characters, the value of the presence position 273 of the crowd object is determined. For the information of these enemy characters, when a crowd is formed, the initial values can be formed by obtaining information of the enemy characters immediately before when the crowd is formed.

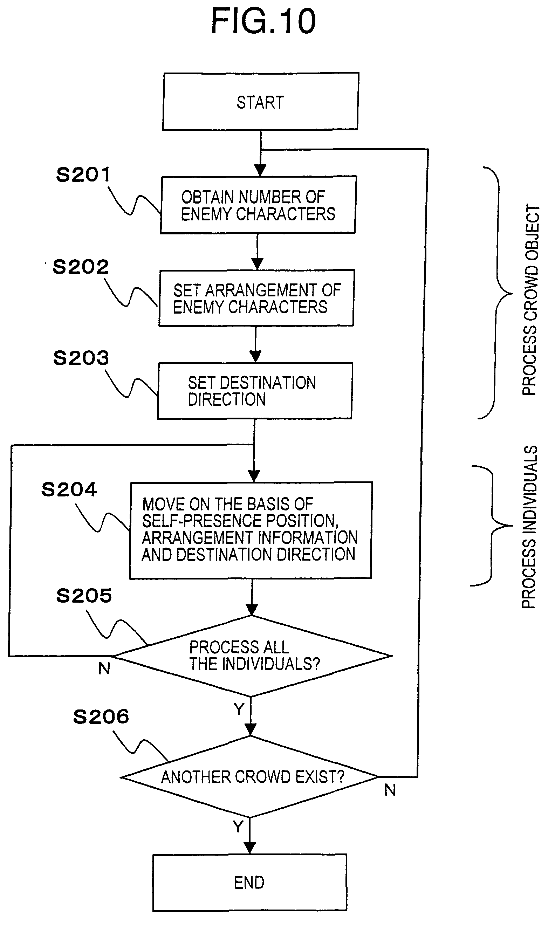

As described above, in a case where the crowd object is recorded in the object list at time t, the object control section 203 causes a turn of the crowd object at time t to be performed before a turn of the enemy character object in the individual mode at time t is performed. The processing performed by the crowd object at one turn is described below with reference to the flowchart in Fig. 10.

Here, a crowd object G formed of the enemy character A, the enemy character B, and the enemy character C is taken as an example.

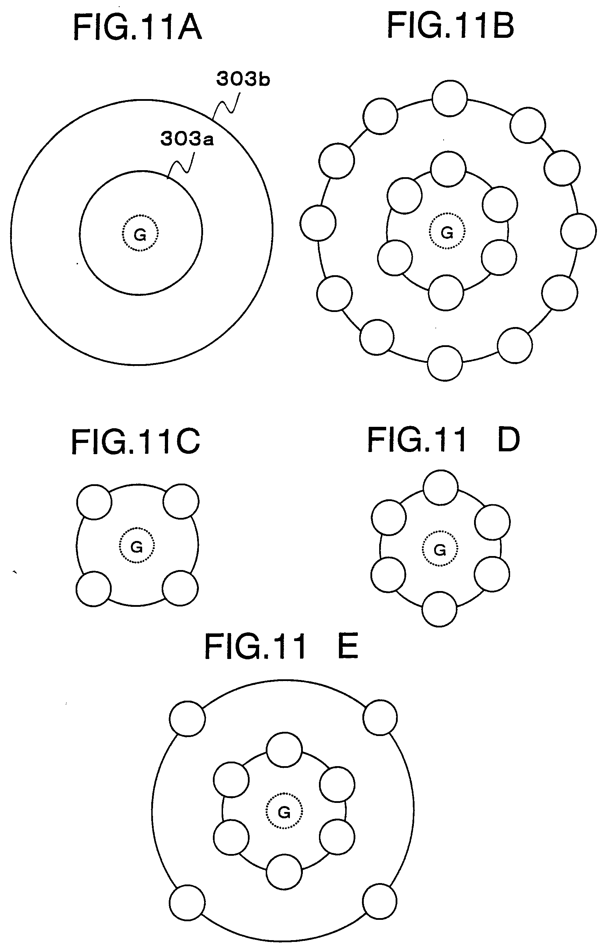

Initially, the crowd object G obtains information of the number 272 of enemy characters which form the crowd (S201), and based on this information, creates the arrangement information of the enemy characters (S202). The processing at this time is described below with reference to Figs. 11A, 11B, 11C, 11D, and 11E.

First, the crowd object G determines the arrangement form. The rule for determining the arrangement form is arbitrary, and here, a rule for attractively expressing the form of a crowd is used. The rule is described below.

As shown in Fig. 11A, for the crowd object G, a plurality of concentric circles having predetermined radiuses about the position of the crowd object G are assumed. The concentric circles are set as a first layer 303a, a second layer 303b, ..., starting from the concentric circle near the center. The sizes of these concentric circles may be fixed or variable. When the sizes are variable, for example, the sizes of this concentric circles may be varied so as to correspond to the attribute of the block in which the crowd object is present or so as to correspond to the operation of the player.

For example, as shown in Fig. 11B, it is assumed that enemy characters up to six members can be arranged in the first layer 303a and enemy characters up to twelve members can be arranged in the second layer 303b. Hereafter, in a similar manner, enemy characters up to $3 \times 2^N$ members can be arranged in the N-th layer.

In this case, in the crowd object G, the enemy characters which form the crowd are distributed in sequence from the first layer 303a. That is, when the number of the enemy characters which form the crowd is from two to three, all are distributed in the first layer. When the number of the enemy characters which form the crowd is from 7 to 18, six members are distributed in the first layer 303a, and the remaining members are distributed in the second layer 303b. At this point in time, which enemy character is arranged in which layer is not yet determined.

Next, in the crowd object, the arrangement is determined so that the intervals of each of the enemy characters become equal with regard to a layer in which the enemy characters are arranged. For example, in a case where the number of enemy characters which form the crowd object G is four and all the enemy characters are distributed in the first layer 303a, if they are arranged so that these intervals become equal in the concentric circle, as shown in Fig. 11C, the four enemy characters are arranged so as to draw a square in the concentric circle. In a similar manner, in the case of six members, the arrangement is made so as to draw a regular hexagon as shown in Fig. 11D, and in the case of ten members, a two-layer structure is formed as shown in Fig. 11E, the first layer 303a draws a regular hexagon, and the second layer 303b draws a regular square.

Next, in the crowd object G, the arrangement determined as described above is assigned to each of the enemy characters which form the crowd. The crowd object compares the position of the enemy character with the determined arrangement in order to determine which enemy character should be assigned to which arrangement. The assignment method is arbitrary. For example, by referring to the current position of each enemy character, the assignment may be performed so that the moved distance becomes shortest as a whole. Alternatively, identification numbers may be assigned to the enemy characters and the arrangement so that the arrangement is performed in the sequence of numbers. Here, an enemy character which is nearby most is assigned to each arrangement position.

When the arrangement assignment of each enemy character is determined by this processing, the crowd object notifies this assignment information to each enemy character. As a result, the enemy character is capable of being informed of that which position (coordinates) on the virtual plane the enemy character was assigned.

It is also possible to limit the assignment position according to the block attribute of the virtual space 310. For example, if the block attribute is a river, a rule may be used such that an enemy character cannot be arranged in that block.

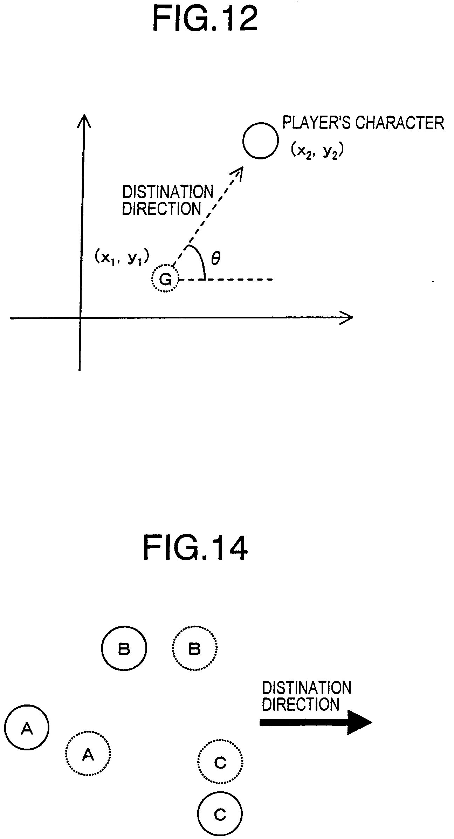

Next, the crowd object performs a process for determining the destination direction (S203). The destination direction of the crowd object is set to be a direction in which a player character is present. For example, as shown in Fig. 12, if the presence position of the crowd object is $(x_1, y_1)$ at time t, and the presence position of the player character is $(x_2, y_2)$ at time t, the destination direction of the crowd object is as shown below if the angle between the destination direction and the X axis is denoted as $\theta$:

$$\theta = \tan^{-1} (y_2 - y_1)/(x_2 - X_1)$$

where $x_2 \neq x_1$, and $\theta = 90°$ when $x_2 = x_1$.

The crowd object notifies this destination direction to each of the enemy characters which form the crowd object.

A process for searching for the position at which the player character is present by the crowd object can be performed, for example, by searching the blocks within the range of a predetermined distance in sequence with the block at which the crowd object is present as the center and by determining whether or not the player character is present within that block. As a result, when the player character is found in the block within the range of the search, that direction can be set to be the destination direction. When, on the other hand, the player character cannot be found, the destination direction can be determined by performing a process, such as maintaining the destination direction immediately before or changing the destination direction randomly.

The crowd object only determines this destination direction, and the crowd object itself does not move independently. This is because the position of the crowd object is the center of the enemy characters which form the crowd object. Therefore, the crowd object move resultantly as a result of the movement of each enemy character which is a member of the crowd object.

The movement of the enemy characters which form the crowd is described below.

The enemy characters, which form the crowd, in the crowd mode, as described above, obtain, from the crowd object, arrangement information about which coordinates on the virtual plane they are assigned and the information about the destination direction.

The presence position of the enemy character which is a member the crowd at time t + Δt is determined on the basis of the arrangement information and the destination direction (S204).

The movement of the enemy character which is a member of the crowd is processed as a child turn of the turn of the crowd object at time t. That is, the turn has a nest structure. For example, if the crowd object G is composed of the enemy character A, the enemy character B, and the enemy character C, during the turn of the crowd object G, provided from the object control section 203, the crowd object G causes the enemy characters A, B, and C to turn (the child turn in the turn of the crowd object G) in sequence.

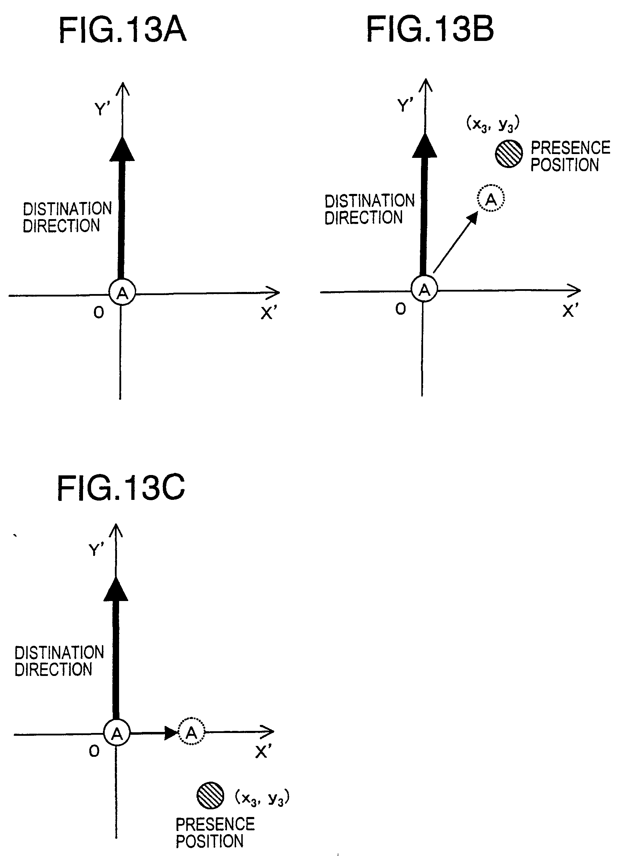

Here, by taking the enemy character A as an example, an example of the movement process of an enemy character in a child turn is described by referring to Figs. 13A, 138, and 13C.

It is assumed that the enemy character A in the crowd mode is present at the coordinates $(x_1, y_1)$ on the virtual plane at time t. Then, it is assumed that the arrangement information $(x_3, y_3)$ and the destination direction θ are provided from the crowd object. At this time, the presence position of the enemy character A at time t + Δt is determined as described below.

Here, for the sake of simplicity, a coordinate system differing from the coordinates of the virtual space 310 is considered. As shown in Fig. 13A, the presence position $(x_1, y_1)$ of the enemy character at time t is set to (0, 0), and the destination direction is set to θ = 90°.

First, it is determined whether the arrangement information shows that the enemy character A is in front or behind with respect to the destination direction. In the case of this example, it is determined whether $y_3$ of the arrangement information $(x_3, y_3)$ is equal to or more than 0, or less than 0.

When it is determined that the coordinates of the arrangement information are in front with respect to the destination direction, the enemy character A moves by the distance of movement speed $\times$ Δt toward the coordinates $(x_3, y_3)$ of the arrangement information at a high movement speed, for example, movement speed = reference speed x 1.2. Then, as shown in Fig. 13B, the coordinates obtained thereby are assumed to be the presence position at time t + Δt.

In Fig. 13B, a solid-line circle A indicates the position of the enemy character A at time t, and a broken-line circle A indicates the position of the enemy character A at time t + Δt.

On the other hand, when it is determined that the coordinates of the arrangement information are behind with respect to the destination direction, the enemy character A moves by the distance of movement speed x Δt toward the coordinates $(x_3, 0)$ at a low movement speed, for example, movement speed = reference speed $\times$ 0.6. That is, the enemy character A moves so as to come close to the coordinates $(x_3, y_3)$ of the arrangement information without moving back with respect to the destination direction. Then, as shown in Fig. 13C, the coordinates obtained thereby are assumed to be the presence position at time t + Δt.

By performing the movement process on the enemy character B and the enemy character C in a similar manner (S205), the turn of the crowd object G at time t is terminated.

In a case where another crowd object is entered in the object list, the crowd object is also made to perform a turn in a similar manner (S206).

After the termination of the turn at time t, at the turn of the crowd object G at time t + Δt, the crowd object G determines its own presence position on the basis of the presence positions of the enemy character A, the enemy character B, and the enemy character C which form the crowd at time t + Δt. Then, the crowd object G determines the arrangement information and the destination direction as described above, and notifies these to the enemy characters which form the crowd. By repeating such processing, it is possible to express a state in which a player character is chased by a crowd in a game apparatus.

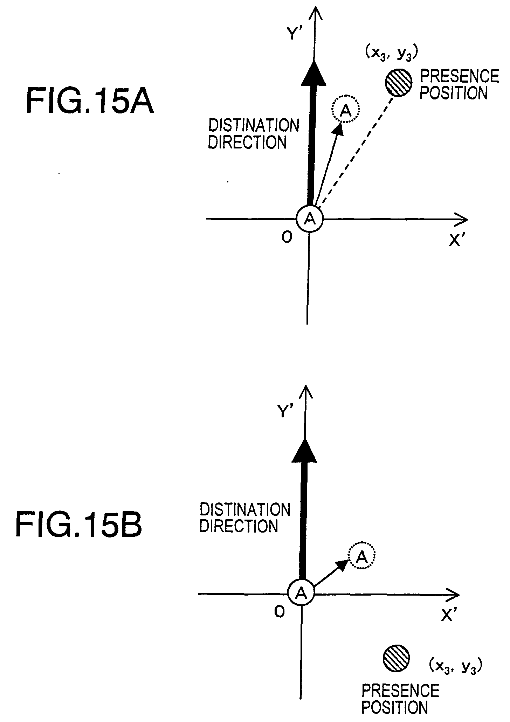

Fig. 14 shows a state in which the enemy character A, the enemy character B, and the enemy character C move as a crowd from time t to time t+ Δt. In Fig. 14, solid-line circles A, B, and C indicate the positions of the enemy characters at time t, and dotted-line circles A, B, and C indicate the positions of the enemy characters at time t + Δt. As shown in Fig. 14, a state is expressed in which the enemy characters move in the destination direction while forming a crowd.

For the sake of simplicity, the above example assumes that the presence position $(x_1, y_1)$ is (0, 0) and the destination direction is θ = 90°. This relationship can be generalized by setting a virtual coordinate axis in which the current position is set to be the origin, the Y axis is made to coincide with the destination direction and by performing a coordinate conversion.

The above-described movement process of the enemy characters is an example, and the movement process of the present invention is not limited to this example. For example, when it is determined that the coordinates of the arrangement information is in front with respect to the destination direction, as shown in Fig. 15A, the enemy characters may be moved in a direction in which the destination direction and the direction of the coordinates of the arrangement information are combined. Also, even when it is determined that the coordinates of the arrangement information are behind with respect to the destination direction, as shown in Fig. 15B, the enemy characters may be moved forward in the destination direction. As a result of the above, it is possible to better express a state in which the enemy characters chase a player character.

Next, a description is given of a change in the state of a crowd. The crowd is composed of individuals, and individuals which form a particular crowd change dynamically.

First, a case is described in which an enemy character which acts as an individual is merged into a crowd. When a crowd object is detected within a circle of a radius "b" with its own presence position as the center while turning, an enemy character which acts as an individual is merged into the crowd.

Specifically, the object control section 203 deletes the ID of the enemy character from the object list, adds 1 to the number 272 of enemy characters managed by the crowd object, and adds the ID of the enemy character and the information for the presence position to the object list. Then, the mode of the enemy character is changed to the crowd mode. As a result of this processing, the enemy character which acts as an individual is merged into the crowd.

Next, a description is given of a case in which the enemy character which is a member of the crowd is separated from the crowd. The enemy character which acts as part of a crowd is separated from the crowd when the distance between its own presence position and the position of the crowd becomes equal to or greater than "b" during a child turn, and acts as an individual.

Specifically, the object control section 203 adds the ID of the enemy character to the object list, subtracts 1 from the number 272 of enemy characters managed by the crowd object, and deletes the ID of the enemy character and the information about the presence position. Then, the mode of the enemy character is changed to the individual mode. As a result of this processing, the enemy character which acts as part of a crowd is separated from the crowd.

The size of the distance "b", which is a reference for merging and separation, may be fixed to a particular value in the coordinates of the virtual space 310, or may be changed in such a manner as to correspond to the size of the crowd. As a result of the above, if the crowd is large, it is possible to make it easy for the enemy character to be merged, and if the crowd is small, it is possible to make it easy for the enemy character to be separated.

It is also possible for the crowd which chases a player character in such a manner as to be distributed in a plurality of crowds under fixed conditions. Processing at this time is described below.

As described above, since the destination direction of the crowd object is a direction in which the player character is present, usually, the crowd chases straight toward the player character.

However, as described above, in a case where, for example, an attribute, such as a pond, through which the enemy character cannot pass, is set in the block attribute of the virtual space 310, since this block must be avoided, there are a plurality of routes in which the player character is chased.

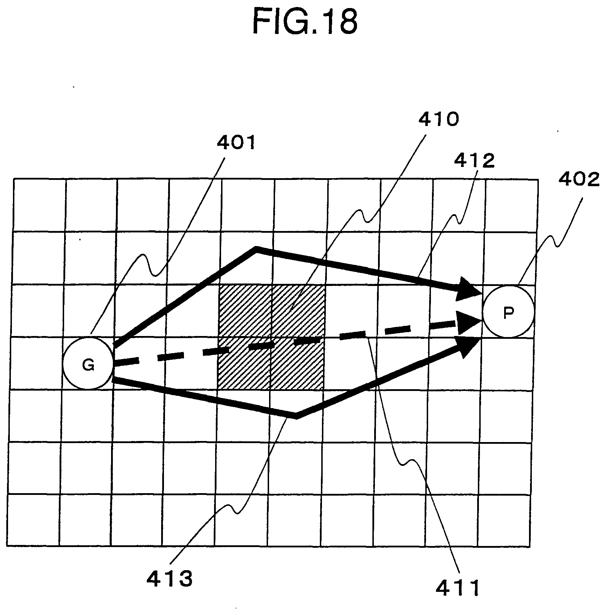

Fig. 18 is an illustration of an example of a state at this time. In Fig. 18, a crowd object 401 chases a player character 402. An area 410 formed of four blocks indicated by the shaded lines has an attribute of which the enemy character cannot pass through. Usually, the destination direction of the crowd object 401 is directed to a direction in which the player character 402 is present, as indicated by a broken line 411. In the case of Fig. 18, since the area 410 cannot be passed through the area 410, two routes, a route 412 and a route 413, are given as candidates.

The object control section 203 performs a process for dividing the crowd G in such a case. That is, in the case of Fig. 18, the crowd 401 is divided into a first crowd which passes through the route 412 and a second crowd which passes through the route 413. Of course, when three or more routes are given as candidates, the crowd can be divided into three or more crowds.

Here, in the retrieval of a candidate route, a shortest route for a means capable of avoiding an obstruction (in the case of Fig. 18, each of a means passing through a portion above the pond 410 and a means passing through a portion below the pond 410) can be determined as a candidate route.

When dividing the enemy characters, various methods may be used as a method of distributing the enemy characters which form the crowd. For example, the number of enemy characters which form the crowd object is evenly divided to form respectively new crowds, or the number of enemy characters is distributed at the ratio of distances up to the player character of the respective routes or at the ratio in inverse proportional to the distance, thereby forming respectively new crowds.

In the dividing process, the object control section 203 deletes the crowd object before division from the object list, adds the divided crowd objects to the object list, and adds information for the enemy characters which form the crowd.

At this time, it is necessary to cause the enemy characters of the divided crowds not to take an action for newly forming a crowd for a fixed time. If this is not performed, the crowds may merge again immediately after the division.

Also, for example, in a case where the difference of a moved distance to a player character is large between a case in which a route 412 is passed through and a case in which a route 413 is passed through, for example, in a case where the distance to one of the routes is 1.5 times longer than the distance to the other route, the crowd may not be divided.

The exterior and the hardware construction of the game apparatus 10 are not limited to those shown in Figs. 16 and 17. The game apparatus 10 may have a construction of a general information processing apparatus comprising a CPU, a memory, an external storage device such as a hard disk unit, a reading apparatus for reading data from a transportable storage medium such as CD/DVD-ROM, an input device such as a keyboard or a mouse, a display apparatus, a data communication apparatus for performing communication via a network such as the Internet, and an interface for controlling transmission and reception of data among the above-described apparatuses. In this case, in the game apparatus 10, programs for forming a software structure shown in Fig. 1 and data may be read from a transportable storage medium via a reading apparatus and may be stored in a memory or an external storage medium. Alternatively, the programs and the data may be downloaded from a network via a data communication apparatus and may be stored in a memory or an external storage medium.

The expression technique of the present invention is not limited to the above-described examples and can be applied to a motion expression of many assemblies. For example, the expression technique can also be applied to a motion image expression of a group of fish, birds, insects, etc.

As has thus been described, according to the present invention, it is possible to express, by an information processing apparatus, the behavior of each individual in a case where individuals move in crowds and a state of a natural movement as crowds.

Many different embodiments of the present invention may be constructed without departing from the spirit and scope of the present invention. It should be understood that the present invention is not limited to the specific embodiment described in this specification. To the contrary, the present invention is intended to cover various modifications and equivalent arrangements included within the spirit and scope of the invention as hereafter claimed. The scope of the following claims is to be accorded the broadest interpretation so as to encompass all such modifications, equivalent structures and functions.

**Claims**

1. A method of expressing a movement of a crowd made up of a plurality of individuals in an information processing apparatus, said method comprising the steps of:

   obtaining the number of individuals which form a crowd at time t and the position of each individual, and assigning a position to each individual in the crowd at the next time t + 1 in accordance with a predetermined arrangement rule;

   determining a destination direction with regard to a reference point of the crowd, determined by the positions of the individuals which form the crowd at time t; and
   determining the position at the next time t + 1 according to the position assigned by said arrangement process and said destination direction.

2. A program which causes an information processing apparatus to execute:

   an arranging process for obtaining the number of individuals which form a crowd at time t and the position of each individual, and assigning a position to each individual in the crowd at the next time t + 1 in accordance with a predetermined arrangement rule;
   a process for determining a destination direction with regard to a reference point of the crowd, determined by the positions of the individuals which form the crowd at time t; and
   a process for determining the position at the next time t + 1 according to the position assigned by said arrangement process and said destination direction.

3. An information processing apparatus comprising:

   arranging means for obtaining the number of individuals which form a crowd at time t and the position of each individual, and assigning a position to each individual in the crowd at the next time t + 1 in accordance with a predetermined arrangement rule;
   means for determining a destination direction with regard to a reference point of the crowd, determined by the positions of the individuals which form the crowd at time t; and
   means for determining the position at the next time t + 1 according to the position assigned by said arrangement process and said destination direction.

4. A program for displaying, on a display apparatus, a moving image of a plurality of characters which move in a virtual space, said program causing an information processing apparatus to execute:

   a mode determination process for determining whether each character should operate as an individual or as a crowd;
   a virtual object creation process for specifying a group of characters which form the crowd and creating a virtual object which gives movement information about movement to the group of characters when it is determined that each character should operate as part of a crowd;

and
a crowd movement process for causing the group of characters to move on the basis of said movement information.

5. A program according to claim 4, wherein said movement information contains information about a character assignment position in a virtual space and information about the destination direction of the virtual object.

6. A program according to claim 5, which further causes said information processing apparatus to execute an operator character display process for displaying, on a display screen of the display apparatus, a moving image of an operator character which moves in a virtual space in accordance with the operation of an operator, which is received via an operation apparatus, wherein the destination direction of said virtual object is a direction in which said operator character in the virtual space is chased.

7. A program according to claim 4, which further causes said information processing apparatus to execute;

a character movement process for causing a character to move in the virtual space when it is determined in said mode determination process that the character should move as an individual;
a character search process for determining whether or not another character is present within an area of a predetermined range corresponding to the position of the character in the virtual space; and
a crowd forming process for causing the character to act so as to form a crowd together with said other character when it is determined that the other character is present.

8. A program according to claim 5, wherein the character assignment position in said virtual space is a position in one circle or in a plurality of concentric circles, around a reference point determined based on the positions of the group of characters which form a crowd, and the characters in the same circle are evenly spaced apart.

9. A recording medium, readable by said information processing apparatus, having recorded therein said program according to any one of claims 2, 4, 5, 6, 7, and 8.

# FIG.1

FROM
CONTROLLER → OPERATION RECEIVING SECTION — 201

VIRTUAL SPACE DB — 205

PLAYER CHARACTER POSITION CALCULATION SECTION — 202

OBJECT CONTROL SECTION — 203

IMAGE CREATION SECTION — 204

DISPLAY CONTROL SECTION — 206 → TO AUDIO-VISUAL OUTPUT APPARATUS

# FIG.2

VIRTUAL SPACE

<u>310</u>

# FIG.3

| |
|---|
| BLOCK ID |
| BLOCK ATTRIBUTE |
| DISPLAY DATA |

251

252

253

## FIG.4A

| |
|---|
| E001 |
| E002 |
| E003 |
| E004 |
| E005 |

## FIG.4B

| |
|---|
| G001 |
| E004 |
| E005 |

## FIG.4C

| |
|---|
| G001 |
| E004 |
| E005 |
| E003 |

# FIG.5

| | |
|---|---|
| OBJECT ID | 261 |
| MODE | 262 |
| PRESENCE POSITION (Xt, Xt) | 263 |
| STANDARD SPEED | 264 |

FIG.6A

300a    300a

300c

300c

300b

300b

FIG.6B

300    301

a

# FIG.7

START

S101

DETECT ANOTHER
ENEMY CHARACTER?

N

S107

FORM A CROWD

Y

S102

DETECT PLAYER
CHARACTER?

N

Y

S103

SET A DIRETION
TOWARD PLAYER
CHARACTER

S104

SET A DIRECTION
RANDOMLY

S105

DETERMINE
MOVEMENT SPEED

S106

CALCULATE
NEXT POSITION

FIG.8A

301

B

A

C

FIG.8B

301

302

B

G

A

C

FIG.8C

B

G

A

C

# FIG.9

271 — CROWD OBJECT ID

272 — NUMBER OF ENEMY CHARACTER

273 — PRESENCE POSITION

| OBJECT ID | PRESENCE POSITION | |
|-----------|-------------------|---|
| OBJECT ID | PRESENCE POSITION | 281a |
| OBJECT ID | PRESENCE POSITION | 281b |
| OBJECT ID | PRESENCE POSITION | 281b |

# FIG.10

```
                    ┌─────────────┐
                    │    START    │
                    └─────────────┘
                          │
          S201            ▼
                 ┌──────────────────────┐  ┐
                 │  OBTAIN NUMBER OF     │  │
                 │  ENEMY CHARACTERS     │  │
                 └──────────────────────┘  │
                          │                 │
          S202            ▼                 │
                 ┌──────────────────────┐  │
                 │  SET ARRANGEMENT OF   │  │  PROCESS CROWD OBJECT
                 │  ENEMY CHARACTERS     │  │
                 └──────────────────────┘  │
                          │                 │
          S203            ▼                 │
                 ┌──────────────────────┐  │
                 │  SET DESTINATION      │  │
                 │  DIRECTION            │  │
                 └──────────────────────┘  ┘
                          │
          S204            ▼
                 ┌──────────────────────────┐  ┐
                 │ MOVE ON THE BASIS OF       │  │
                 │ SELF-PRESENCE POSITION,    │  │  PROCESS INDIVIDUALS
                 │ ARRANGEMENT INFORMATION    │  │
                 │ AND DESTINATION DIRECTION  │  │
                 └──────────────────────────┘  ┘
                          │
          S205            ▼
                    ╱─────────────╲
               N   ╱  PROCESS ALL   ╲
              ◄───┤  THE INDIVIDUALS?│
                   ╲               ╱
                    ╲─────────────╱
                          │ Y
          S206            ▼
                    ╱─────────────╲
                   ╱               ╲   N
                  │ ANOTHER CROWD EXIST?├───►
                   ╲               ╱
                    ╲─────────────╱
                          │ Y
                          ▼
                    ┌─────────────┐
                    │     END     │
                    └─────────────┘
```

EP 1 164 541 A2

# FIG.11A

# FIG.11B

303b

303a

G

# FIG.11C

# FIG.11 D

G

G

# FIG.11 E

G

# FIG.12

# FIG.14

# FIG.13A

Y'

DISTINATION
DIRECTION

A

O

X'

# FIG.13B

Y'

$(x_3, y_3)$

PRESENCE
POSITION

DISTINATION
DIRECTION

A

A

O

X'

# FIG.13C

Y'

DISTINATION
DIRECTION

A

A

O

X'

$(x_3, y_3)$

PRESENCE
POSITION

FIG.15A

FIG.15B

# FIG.16

# FIG.17

# FIG.18